# EUROPEAN PATENT APPLICATION

(11) **EP 2 214 228 A1**
(43) Date of publication of application: **04.08.2010**
(21) Application number: 09766414.8
(22) Date of filing: 16.06.2009
(51) Int. Cl.: H01M 4/02, H01M 4/04

(54) **POSITIVE ELECTRODE FOR NONAQUEOUS ELECTROLYTE SECONDARY BATTERY AND NONAQUEOUS ELECTROLYTE SECONDARY BATTERY USING SAME**

(30) Priority: 17.06.2008 JP 2008158384
(71) Applicant: Panasonic Corporation, Kadoma-shi Osaka 571-8501 (JP)
(72) Inventor: NAGATA, Kaoru, 7F OBP Panasonic Tower, 1-61 Shiromi 2-chome, Chuo-ku, Osaka-shi, Osaksa 540-6207 (JP)
(74) Representative: TBK-Patent
(86) International application number: PCT/JP2009/002723
(87) International publication number: WO 2009/153966

(57) **Abstract**

The present invention has an object to provide a non-aqueous electrolyte secondary battery having a high capacity and favorable charge/discharge characteristics at a high current density. In order to achieve this object, the positive electrode for a non-aqueous electrolyte secondary battery in accordance with the present invention includes a current collector and an active material layer, the active material layer has a first active material layer including dendritic active material particle, and the dendritic active material particles branch out into a plurality of branch portions from a bottom portion of the current collector side toward a surface side of the first active material layer. In the first active material layer, it is preferable that an active material density of the bottom portion side is larger than an active material density of the surface side.

## Description

### [Technical Field]

The present invention relates to a positive electrode for a non-aqueous electrolyte secondary battery, and particularly relates to an improvement of a positive electrode active material layer.

### [Background Art]

In recent years, there has been a rapid movement toward mobile electronic apparatus such as personal computers and cellular phones. As a power source for such electronic apparatus, small sized and light weight secondary batteries having a high capacity are required. For such a reason, non-aqueous electrolyte secondary batteries permitting a higher energy density have been developed widely.

In order to realize non-aqueous electrolyte secondary batteries having a higher energy density, development of active materials having a high capacity has been in progress. Also, various efforts have been made for improving an active material density (load percentage) of an electrode. For example, in order to increase an active material density of an electrode, it has been proposed to make an active material deposited directly on a surface of a current collector thereby to form a dense active material layer without using a conductive agent or a binder made of a resin. Further, researches on the control of the structure of active materials have been conducted in order to improve charge/discharge characteristics at a high current density.

Patent Literature 1 proposes to make an active material LiCoO₂ deposited directly on a surface of a current collector by an electron cyclotron resonance sputtering method in order to obtain an electrode having a higher active material density, and discloses an active material layer having a thickness of about 2.6 µm as an electrode for an all solid battery. In contrast to an RF-sputtering method having a film forming speed of 2.4 nm/min, the electron cyclotron resonance sputtering method has a high film forming speed of about 16.6 nm/min. Also, an active material obtained by the electron cyclotron resonance sputtering method has a higher crystallinity than those obtained by the RF-sputtering method, and thereby charge/discharge characteristics of the battery are improved.

Patent Literature 2 proposes to improve charge/discharge characteristics at a high current density by using active material particles having a large specific surface area. Active material particles are aggregations of primary particles having an average particle diameter of 0.1 to 1 µm, and are secondary particles induding a void. These secondary particles are in the form of a bar or a plate having an average length of 5 to 15 µm in the longitudinal direction. Such active material particles have a large specific surface area and can secure sufficiently a lithium ion conductive path, thereby improving charge/discharge characteristics and cycle characteristics at a high current density. Further, large secondary particles enable a high loading and a high capacity.

Patent Literature 3 proposes a positive electrode having, as a positive electrode active material layer, a film having a columnar structure induding Fe deposited on a current collector from a vapor phase or a liquid phase. In Patent Literature 3, a film having a columnar structure is formed of an active material having a high capacity such as K_{1.4}Fe₁₁O₁₇ by a sputtering method thereby to facilitate expansion and contraction of the volume of the positive electrode active material along with charging and discharging to be converted toward the thickness direction. It is described that in consequence, the film structure is not readily broken even if a charge/discharge cycle is repeated, and thus the decrease in the capacity is suppressed.

### [Citation List]

### [Patent Literatures]

Patent Literature 1: Japanese Laid-Open Patent Publication No. 2007-5219
Patent Literature 2: Japanese Laid-Open Patent Publication No. 2004-265806
Patent Literature 3: Japanese Laid-Open Patent Publication No. 2002-298834

### [Summary of the Invention]

### [Technical Problem]

Patent Literature 1 relates to a method for producing a thin film electrode used in all solid batteries, etc. On the other hand, a conventional active material layer in an electrode for a non-aqueous electrolyte secondary battery has a thickness of 10 µm or more, and for example about 60 µm. In the electron cyclotron resonance sputtering method proposed by Patent Literature 1, although the film forming speed is higher than in the RF-sputtering method, the film forming speed is not sufficient for forming an active material layer having an ordinary thickness. Further, since the active material layer obtained by the method of Patent Literature 1 is a dense film, an ion conductive path is not readily formed therein. In consequence, in the case where the active material layer has a relatively large thickness, electrochemical reaction is rendered difficult. Also, such an active material layer is easily peeled off the current collector particularly when the electrode plate is wound.

As in Patent Literature 2, in the case where active material particles having a large specific surface area are used, it is necessary to use relatively a large amount of conductive agent and binder in order to produce an electrode. It is considered that the battery capacity is lowered when the binder is used because the active material density of the electrode becomes relatively small.

The positive electrode active material disclosed in Patent Literature 3 readily forms an active material layer having a columnar structure because it indudes K and Fe. However, it cannot be said that a similar columnar structure can be formed easily in an oxide, etc. containing Li and a transition metal, which is a conventional positive electrode active material for a non-aqueous electrolyte secondary battery. In addition, in the case of an active material layer having an ordinary thickness, the specific surface area becomes small if it has only a simple columnar structure. Also, it is considered that charge/discharge characteristics at a high current density is lowered because the liquid retention property of the non-aqueous electrolyte becomes insufficient. Further, it is considered that in an active material layer having a columnar structure, since respective columnar particles are formed independently, they are readily peeled off the current collector, and the electronic resistance between the current collector and the active material tends to be increased.

Therefore, the present invention has an object to provide a positive electrode active material for a non-aqueous electrolyte secondary battery having a high capacity and favorable charge/discharge characteristics particularly at a high current density in which the active material layer is not readily peeled off the current collector even if wound.

### [Solution to Problem]

The present invention provides a positive electrode for a non-aqueous electrolyte secondary battery induding a current collector and an active material layer, in which the active material layer has a first active material layer induding dendritic active material particles, and the dendritic active material particles branch out into a plurality of branch portions from a bottom portion of the current collector side toward the surface side of the first active material layer.

In the first active material layer, it is preferable that the active material density of the bottom side is larger than the active material density of the surface side. Herein, the bottom side of the first active material layer refers to an area of less than 50% of the total thickness of the first active material layer from the contact surface between the first active material layer and the current collector, and the surface side of the first active material layer refers to an area of 50% or less of the total thickness of the first active material layer from the surface of the first active material layer.

It is preferable that the branch portions have a diameter of 0.01 to 1 µm.

It is more preferable that one dendritic active material particle has two or more branch portions having a length of 0.3 µm or more.

The angle formed between the growth direction of the branch portions having a length of 0.3 µm or more and the normal direction of the current collector ranges from 0 to 30°, for example.

It is preferable that the dendritic active material particles have a trunk portion and that a plurality of branch portions is disposed randomly in the periphery of the trunk portion.

The positive electrode of the present invention may further indude a second active material layer between the current collector and the first active material layer. It is preferable that the porosity of the second active material layer is smaller than the porosity of the first active material layer.

Also, the present invention provides a non-aqueous electrolyte secondary battery induding a positive electrode, a negative electrode, a non-aqueous electrolyte, and a porous insulating layer interposed between the positive electrode and the negative electrode, in which the positive electrode is the positive electrode for a non-aqueous electrolyte secondary battery in accordance with any one described above.

The positive electrode for a non-aqueous electrolyte secondary battery of the present invention can be obtained for example by a thermal plasma method. Therefore, the positive electrode for a non-aqueous electrolyte secondary battery can be obtained with good productivity. When film forming speed is compared, the thermal plasma method can form a film several tens of times faster than other film forming methods such as the sputtering method. Although details are not known, a field having a high reactivity can be produced in a wide range by using the thermal plasma. Therefore, raw materials can be vaporized and decomposed sufficiently thereby to form an active material layer even when the raw materials are supplied several tens of times faster than in the sputtering, for example.

### [Advantageous Effects of Invention]

According to the present invention, it is possible to provide a positive electrode for a non-aqueous electrolyte secondary battery having a high capacity and favorable charge/discharge characteristics at a high current density in which an active material layer is not readily peeled off the current collector even if wound.

### [Brief Description of Drawings]

[FIG. 1] A schematic vertical sectional view of an example of a film forming apparatus.
[FIG. 2] An electron microscope photograph showing a cross section of a positive electrode for a non-aqueous electrolyte secondary battery in accordance with an embodiment of the present invention.
[FIG. 3] An electron microscope photograph showing a cross section of a positive electrode for a non-aqueous electrolyte secondary battery in accordance with another embodiment of the present invention.
[FIG. 4] A schematic vertical sectional view of a coin-type non-aqueous electrolyte secondary battery.
[FIG. 5] An electron microscope photograph showing a surface of a positive electrode for a non-aqueous electrolyte secondary battery in accordance with an embodiment of the present invention.
[FIG 6] An electron microscope photograph showing a surface of a positive electrode for a non-aqueous electrolyte secondary battery in accordance with another embodiment of the present invention.
[FIG 7] An electron microscope photograph showing a surface of a positive electrode active material layer in accordance with a comparative example.
[FIG. 8] A graph showing an X-ray diffraction pattern of a positive electrode of the present invention and an X-ray diffraction pattern of LiCoO₂ powder.
[FIG. 9] A complex impedance plot showing alternating current impedance characteristics of non-aqueous electrolyte secondary batteries of Example 2 and Comparative Example 1.

### [Description of Embodiments]

A positive electrode for a non-aqueous electrolyte secondary battery in accordance with the present invention indudes a current collector and an active material layer, the active material layer having a first active material layer induding dendritic active material particles, and the dendritic active material particles branching out into a plurality of branch portions from a bottom portion of the current collector side toward a surface side of the first active material layer.
A second active material layer having a smaller porosity than that of the first active material layer may be disposed between the first active material layer and the current collector. The second active material layer serves as a protective film that protects the current collector.

Since the active material layer has an increased specific surface area by induding dendritic active material particles, the contact surface area between the active material layer and the non-aqueous electrolyte is enlarged. Therefore, a positive electrode for a non-aqueous electrolyte secondary battery having favorable charge/discharge characteristics particularly at a high current density can be obtained.

In a dendritic active material particle, the bottom portion thereof is directly bonded to the current collector, or directly bonded to a surface of the second active material particle layer. Branchings become fewer toward the bottom portion in the dendritic active material particle, and the contact surface area between the current collector or the second active material layer with the dendritic active material particle is enlarged. In consequence, the electronic resistance between the current collector and the active material layer is decreased. Also, since the bottom portion of the dendritic active material particle is sufficiently adhered to the current collector or the second active material layer, the first active material layer is not readily peeled off the current collector or the second active material layer The number of branch portions is increased toward the surface side of the first active material layer. Since the active material particle of the present invention indudes many branch portions, a crack is not readily produced even if charging and discharging are repeated.

Diffusion resistance of lithium ions is larger in an active material than in a non-aqueous electrolyte. Therefore, discharge characteristics at a high current density are improved by shortening diffusion distance of lithium ions in an active material. In the present invention, since the active material layer is composed of nano-sized particles, diffusion distance of lithium ions in the active material having a large diffusion resistance can be shortened. Further, since the electrode plate is composed of an active material layer induding dendritic active material particles, it is soft and having a good adherence property, and therefore the active material layer is not readily peeled off even if wound. Also, the active material layer does not indude a resin binder that does not contribute to the charge/discharge capacity, and a large amount of the active material only is exposed on the surface. In consequence, a positive electrode for a non-aqueous electrolyte secondary battery having a high capacity and favorable charge/discharge characteristics at a high current density can be obtained.

It is preferable that the dendritic active material particles have a configuration of a coral, a duster of grapes, or a broccoli. One dendritic active material particle preferably indudes two or more, more preferably 5 or more branch portions having a length of 0.3 µm or more. Specifically, it is preferable that, when 6 or more active material particles are observed, one active material particle has, in average, two or more branch portions having a length of 0.3 µm or more. When an area of a square of 50 µm on the surface of the current collector is observed using an electron microscope and a dendritic active material particle induding the largest number of branch portions having a length of 0.3 µm or more is selected as a standard particle, the standard particle preferably has 5 or more branch portions having a length of 0.3 µm or more.

The angle formed between the growth direction of the branch portions having a length of 0.3 µm or more and the normal direction of the current collector is 0 to 30°, for example. Specifically, 2 or more branch portions having a length of 0.3 µm or more are observed in the standard particle, and the angle formed between the growth direction of the respective branch portions and the normal direction of the current collector is determined and averaged.

In the first active material layer, it is preferable that the active material density on the bottom side is larger than the active material density on the surface side. In this preferable embodiment, the first active material layer can be bonded sufficiently to the current collector or the second active material layer, and the first active material layer has an increased specific surface area. From the viewpoint of increasing the active material density it is preferable that the gap between two adjacent dendritic active material particles is 1 µm or less, and it is more preferable that there is no gap.

The dendritic active material particles have a diameter of 0.05 to 5 µm, for example. The diameter of the dendritic active material particles is the largest diameter of the dendritic active material particles when viewed from the normal direction of the current collector. In the present invention, it is preferable to measure the diameter of 15 to 20 particles and determine an average value thereof.

It is preferable that the bottom portion of the dendritic active material particles has a diameter of 0.01 to 5 µm.
In this preferable embodiment, the specific surface area of the active material layer can be increased suficiently. When the bottom portion has a diameter of less than 0.05 µm, the active material particles may be readily peeled off the current collector. Also, the electronic resistance between the current collector and the active material particles may be increased. On the other hand, when the bottom portion has a diameter of more than 5 µm, the specific surface area on the active material layer may be insufficient. The diameter of the bottom portion is defined as the largest diameter on the contact surface between the active material particles and the current collector or the second active material layer. The diameter of the bottom portion is 0.001 to 2 times, and preferably 0.01 to 1 time the diameter of the particles. In the present invention, it is preferable to measure the diameter of the bottom portion of 9 or more particles and determine an average value thereof.

From the viewpoint of increasing the specific surface area of the active material, it is preferable that the branch portions have the smallest possible diameter and that a plurality of branch portions is formed. The diameter of the branch portions is preferably 0.01 to 1 µm. When the diameter of the branch portions is smaller than 0.01 µm, the branch portions may be readily peeled off the active material particles. On the other hand, when the diameter of the branch portions is more than 1 µm, it is difficult to form a plurality of branch portions and the specific surface area of the active material may be insufficient. The diameter of the branch portions is defined as the largest diameter of the branch portions when viewed from the growth direction of the branch portions. In the present invention, it is preferable to measure the diameter of 8 or more branch portions and determine an average value thereof.

It is preferable that the dendritic active material particles have a height of 1 to 100 µm, and more preferably 10 to 80 µm. In the first active material layer, the dendritic active material particles may not necessarily have a uniform height.

It is preferable that the first active material layer has a porosity of 20 to 90%. With the porosity of the first active material layer being 20 to 90%, the non-aqueous electrolyte can readily permeate to the vicinity of the current collector. In consequence, a good conductive path of lithium ions can be easily formed, thereby improving charge/discharge characteristics at a high current density.

It is preferable that the second active material layer has a porosity of 10 to 70%. With the porosity of the second active material layer being in the above range, the active material density in the vicinity of the current collector is increased. Also, since the current collector can be protected preferably during the formation of the first active material layer, the film forming speed of the first active material layer can be increased.

It is preferable that the first active material layer has a thickness of 1 to 100 µm. It is preferable that the second active material layer has a thickness of half or less of the thickness of the first active material layer, for example 0.01 to 10 µm. The thickness of the first active material layer is an average value of the height of 50 dendritic active material particles, for example.

The second active material layer may indude dendritic active material particles that are smaller than the dendritic active material particles included in the first active material layer. By doing so, the specific surface area of the active material layer is increased, thereby improving charge/discharge characteristics at a high current density.

A positive electrode for a non-aqueous electrolyte secondary battery induding dendritic active material particles can be formed using a film forming apparatus utilizing thermal plasma, for example. Although detailed mechanism in which the above positive electrode is formed is unknown, it is considered that particles formed in the thermal plasma are cooled in the vicinity of the current collector, and a part of the particles are bonded to form a duster of a nano-size. It is considered that the duster and decomposed raw materials are adhered onto the current collector or the second active material layer, and the particles grow toward the plasma as a heat source thereby forming dendritically branching active material particles. Also, since an active material layer not induding a binder can be readily formed by performing film forming using the thermal plasma, a battery having a higher capacity can be obtained.

In order to improve the film forming speed, it is necessary to increase the speed of supplying the raw materials of the active material, and the amount of energy required is increased along with this. However, when the amount of energy is too large, the active material and the current collector may be deteriorated thereby decreasing the battery capacity. Therefore, it is preferable to form the first active material layer induding dendritic active material particles and the second active material layer induding relatively small active material particles.

First, the second active material layer is formed with a relatively small energy. Since the second active material layer serves to protect the current collector, the speed of supplying the raw materials can be increased while inhibiting deterioration of the current collector. Therefore, the first active material layer can be formed at a high film forming speed.

An example of a film forming apparatus utilizing thermal plasma will be described with reference to drawings.

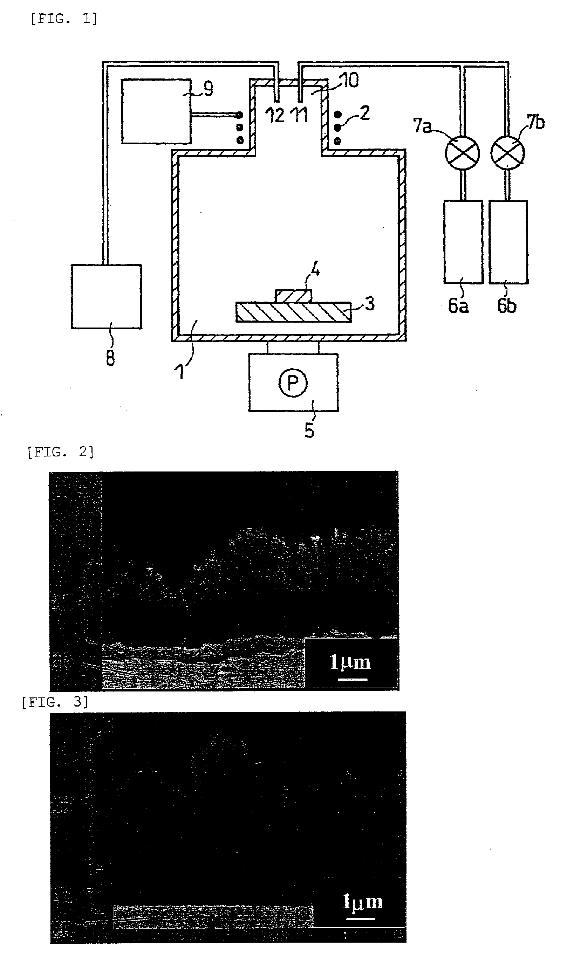

FIG 1 is a schematic vertical sectional view of a film forming apparatus. The film forming apparatus indudes a chamber 1 providing a space for film forming and a thermal plasma generating source. The thermal plasma generating source indudes a torch 10 providing a space for generating thermal plasma and an induction coil 2 surrounding the torch 10. A power source 9 is connected to the induction coil 2.

The chamber 1 may include, as necessary, or may not indude an exhaust pump 5. By generating thermal plasma after removing air remaining in the chamber 1 with the exhaust pump 5, contamination of the active material can be inhibited. By using the exhaust pump 5, configuration of the gas flow of plasma can be readily controlled. Further, it becomes easy to control film forming conditions such as pressure inside the chamber 1. The chamber 1 may indude a filter (not shown) for collecting dust and the like.

A stage 3 is disposed vertically downside the torch 10. Although the material of the stage 3 is not particularly limited, one having an excellent heat resistance such as stainless steel is preferable. A current collector 4 is disposed on the stage 3. The stage 3 may indude a cooling portion (not shown) for cooling the current collector as necessary.

One end portion of the torch 10 is open to the side of the chamber 1. In the case where a high frequency voltage is used, it is preferable that the torch 10 is composed of a material having a superior heat resistance and insulating property, such as ceramics (quartz and silicon nitride), etc. The inner diameter of the torch 10 is not particularly limited. By increasing the inner diameter of the torch, the reaction field can be enlarged. In consequence, the active material layer can be formed efficiently.

A gas supply inlet 11 and a raw material supply inlet 12 are disposed on the other end of the torch 10. The gas supply inlet 11 is connected to gas supply sources 6a and 6b via valves 7a and 7b, respectively. The raw material supply inlet 12 is connected to a raw material supply source 8. Thermal plasma can be generated efficiently by supplying a gas from the gas supply inlet 11 to the torch 10.

More than one gas supply inlet 11 may be disposed from the viewpoint of stabilizing the thermal plasma and controlling the gas flow in the thermal plasma. In the case of disposing more than one gas supply inlet 11, the direction from which the gas is introduced is not particularly limited, and it may be an axis direction of the torch 10 or a direction perpendicular to the axis direction of the torch 10. It is preferable that the ratio of the amount of the gas introduced from the axis direction of the torch 10 to an amount of the gas introduced from the direction perpendicular to the axis direction of the torch 10 is in the range of 100:0 to 10:90. The larger the amount of the gas introduced from the axis direction of the torch 10, the thinner the gas flow in the thermal plasma becomes and the higher the temperature of the central portion of the gas flow, thereby to facilitate vaporization and decomposition of the raw materials. From the viewpoint of stabilizing the thermal plasma, it is preferable to control the amount of the gas introduced by using a mass flow controller (not shown) and the like.

When a voltage is applied from a power source 9 to the induction coil 2, thermal plasma is generated in the torch 10. The voltage applied may be a high frequency voltage or a direct current voltage. Also, a high frequency voltage and a direct current voltage may be combined. In the case of using a high frequency voltage, it is preferable that the frequency thereof is 1000 Hz or more. A material of the induction coil 2 is not particularly limited, and a metal having low resistance such as copper may be used.

When the thermal plasma is generated, the temperature of the induction coil 2 and the torch 10 becomes high. Therefore, it is preferable to dispose a cooling part (not shown) in the periphery of the induction coil 2 and the torch 10. As the cooling part, for example a water cooling apparatus can be used.

FIG 2 is an electron microscope photograph showing a cross section of an example of the positive electrode for a non-aqueous electrolyte secondary battery in accordance with the present invention.

The positive electrode indudes a current collector 20 and a first active material layer 21. The active material layer indudes dendritic active material particles. In FIG. 2, each particle has a dendritic form having a branch portion and a bottom portion and grows from the current collector side toward the surface side of the active material layer

FIG 3 is an electron microscope photograph showing a cross section of another example of the positive electrode for a non-aqueous electrolyte secondary battery in accordance with the present invention. The positive electrode of FIG. 3 indudes a current collector 20, a first active material layer 22, and a second active material layer 23. In FIG. 3, each particle has a dendritic form having a branch portion and a bottom portion and grows from the current collector side toward the surface side of the active material layer. It is preferable that the porosity of the second active material layer is smaller than the porosity of the first active material layer.

The positive electrode active material indudes a lithium-containing composite oxide. The lithium-containing composite oxide preferably has a layered or hexagonal crystal structure or a spinel structure, and preferably indudes a transition metal such as Co, Ni, Mn, and Fe. Specific examples indude LiCoO₂, LᵢNi_{1/2}Mn_{1/2}O₂, LiNi_{1/2}Co_{1/2}O₂, LiNiO₂, LiNi_{1/3}Mn_{1/3}Co_{1/3}O₂, LiNi_{1/2}Fe_{1/2}O₂, LiMn₂O₄, LiFePO₄, LiCoPO₄, LiMnPO₄, and Li_{4/3}Ti_{5/3}O₄. The positive electrode active material can be used singly or in combination of two or more of them.

There is no particular limitation for a positive electrode current collector, and for example an electrically conductive material generally used in an electrochemical device can be used. Specifically, Al, Ti, stainless steel (SUS), Au, Pt, etc. are preferably used. These current collectors are preferable in that dissolution of metal from the current collector is small when extraction reaction of Li is performed up to about 3.5 to 4.5 V (vs. Li/Li⁺).

A non-aqueous electrolyte secondary battery in accordance with the present invention will be described.

The non-aqueous electrolyte secondary battery in accordance with the present invention indudes a positive electrode, a negative electrode, a non-aqueous electrolyte, and a porous insulating layer interposed between the positive electrode and the negative electrode. The non-aqueous electrolyte secondary battery in accordance with the present invention indudes the positive electrode for a non-aqueous electrolyte secondary battery described above, and there is no particular limitation as to other constitution.

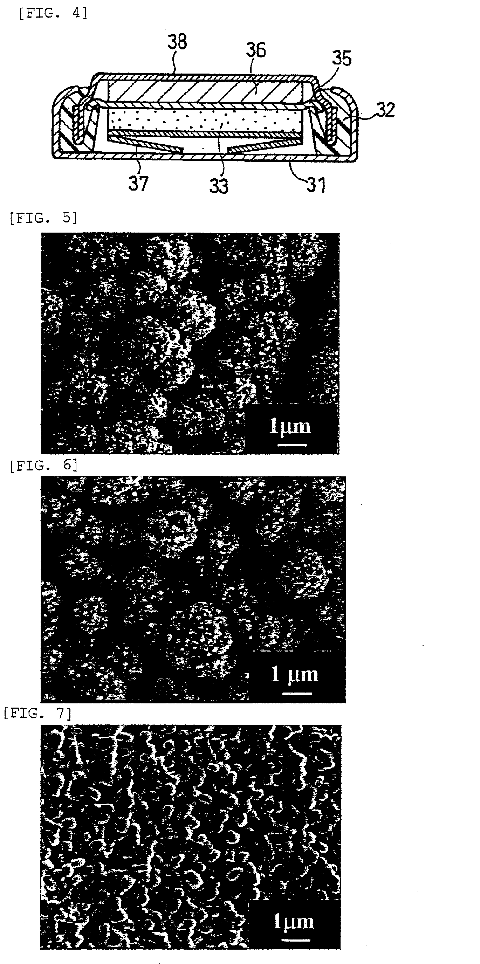

An example of the non-aqueous electrolyte secondary battery will be described with reference to drawings. FIG 4 is a schematic vertical sectional view of a coin-type non-aqueous electrolyte secondary battery. The coin-type non-aqueous electrolyte secondary battery indudes a positive electrode 33, a negative electrode 36, a porous insulating layer 35 interposed therebetween, and a non-aqueous electrolyte (not shown). The positive electrode 33 indudes a positive electrode current collector and a positive electrode active material layer formed on the positive electrode current collector. The positive electrode 33, the negative electrode 36, and the porous insulating layer 35 may be compressed as necessary using a coned disc spring 37. The porous insulating layer 35 is impregnated with the non-aqueous electrolyte. A case 31 also serving as a positive electrode terminal and a sealing plate 38 also serving as a negative electrode terminal are insulated from each other with a gasket 32.

As a negative electrode active material, a carbon material, a metal, an alloy, a metal oxide, a metal nitride, etc. can be used. As a carbon material, natural graphite, artificial graphite, etc. are preferable. As a metal or an alloy a lithium simple substance, a lithium alloy, a silicon simple substance, a silicon alloy, a tin simple substance, a tin alloy, etc. are preferable. As a metal oxide, SiOₓ (0<x<2, preferably 0.1≦x≦1.2) and the like are preferable.

As the negative electrode current collector, Cu, Ni, stainless steel (SUS), etc. are preferably used. These current collectors are preferable in that dissolution of metal from the current collector is relatively small when insertion reaction of Li is performed up to about 0 to 3.5 V (vs. Li/Li⁺).

As the porous insulating layer, a nonwoven fabric or a microporous film composed of polyethylene, polypropylene, aramid resin, amideimide, polyphenylene sulfide, polyimide, etc. can be used. The nonwoven fabric and the microporous film may have a single layer or multilayer structure. A heat resistant filler such as alumina, magnesia, silica, titania, etc. may be contained inside or on the surface of the porous insulating layer.

The non-aqueous electrolyte indudes a non-aqueous solvent and a solute dissolved in the non-aqueous solvent. The solute is not particularly limited and can be selected appropriately considering an oxidation reduction potential etc. of the active material. Examples of a preferable solute indude LiPF₆, LiBF₄, LiClO₄, LiAlC₄, LiSbF₆, USCN, UCF₃SO₃, LiOCOCF₃, LiAsF₆, LiB₁₀Cl₁₀, lithium lower aliphatic carboxylate, LiF, LiCl, LiBr, Lil, chloroborane lithium, borates such as
lithium bis(1,2-benzendiolate(2-)-O,O')borate, lithium bis(2,3-naphthalenediolate(2-)-O,O')borate,
lithium bis(2,2'-biphenyldiolate(2)-O,O')borate, lithium bis(5-fluoro-2-olate-1-benzensulfonate-O,O')borate,
LiN(CF₃SO₂)₂, LiN(CF₃SO₂)(C₄F₉SO₂), LiN(C₂F₅SO₂)₂, and lithium tetraphenylborate.

The non-aqueous solvent is not particularly limited as well. Examples thereof indude ethylene carbonate (EC), propylene carbonate, butylene carbonate, vinylene carbonate, dimethyl carbonate (DMC), diethyl carbonate,
ethylmethyl carbonate (EMC), dipropyl carbonate, methyl formate, methyl acetate, methyl propionate, ethyl propionate, dimethoxyethane, γ-butyrolactone, γ-valerolactone, 1,2-diethoxyethane, 1,2-dimethoxyethane, ethoxymethoxyethane, trimethoxymethane; tetrahydrofuran derivatives such as tetrahydrofuran and 2-methyl tetrahydrofuran; dimethyl sulfoxide; dioxolane derivatives such as 1,3-dioxolane and 4-methyl-1,3-dioxolane; formamide, acetoamide, dimethylformamide, acetonitrile, propylnitrile, nitromethane, ethyl monoglyme, phosphoric acid triester, acetic acid ester, propionic add ester, sulfolane,
3-methyl suffolane, 1,3-dimethyl-2-imidazolidinone, 3-methyl-2-oxazolidinone, propylene carbonate derivatives, ethylether, diethylether, 1,3-propansultone, anisole, and fluorobenzene. These can be used singly or in combination of two or more thereof.

The non-aqueous electrolyte may indude an additive. The additive is not particularly limited, and examples thereof indude vinylene carbonate, cydohexylbenzene, biphenyl, diphenylether, vinylethylene carbonate,
divinylethylene carbonate, phenylethylene carbonate, diaryl carbonate, fluoroethylene carbonate, catechol carbonate, vinyl acetate, ethylene sulfite, propanesulfone, trifluoropropylene carbonate, dibenzofuran, 2,4-difluoroanisole, o-terphenyl, and m-terphenyl.

The non-aqueous electrolyte may be a solid electrolyte including polymer materials, and may also be a gel electrolyte further induding a non-aqueous solvent. Examples of the polymer materials indude polyethylene oxide, polypropylene oxide, polyphosphazen, polyaziridine, polyethylene sulfide, polyvinyl alcohol, polyvinylidene fluoride, and polyhexafluoropropylene.
Further, inorganic materials such as lithium nitride, lithium halide, lithium oxyacid salt, Li₄SiO₄, Li₄SiO₄-Lil-LiOH, Li₃PO₄-Li₄SiO₄, Li₂SiS₃, LbPO₄-Li₂S-SiS₂, and phosphorus sulfide compound may be used as the solid electrolyte.

### [Examples]

The present invention will be described specifically with reference to examples and comparative examples. However, the present invention is not limited by these examples and comparative examples.

### [Example 1]

### (1) Production of positive electrode

A high frequency induction thermal plasma generating apparatus (TP-12010) manufactured by JEOL Ltd. including a chamber having an inner capacity of 6250 m³ and a thermal plasma generating source was used as the film forming apparatus. A torch composed of a tube of silicon nitride of φ42 mm and an induction coil made of copper enclosing the torch were used as the thermal plasma generating apparatus.

A stage is disposed at the location of 345 mm down the lower end of the torch in the chamber. A current collector (having a thickness of 0.1 mm) composed of a stainless steel (SUS) plate was disposed on the stage. Thereafter, air in the chamber was replaced with an argon gas.

An argon gas was introduced in the chamber at a flow rate of 50 Umin, and an oxygen gas was introduced at a flow rate of 30 Umin. The pressure in the chamber was set to be 18 kPa. A high frequency voltage of 42 kW with a frequency of 3.5 MHz was applied to the induction coil thereby to generate thermal plasma.

As the raw material, a mixture of Li₂O and Co₃O₄ was used. Li₂O was classified to 30 µm or less. The average particle diameter D50 of Co₃O₄ (on the basis of volume) was set to be 5 µm. Li₂O and Co₃O₄ were mixed such that the stoichiometric ratio of Le:Co=1.5:1. An argon gas and an oxygen gas were introduced into a flow path at 50 Umin and 30 Umin, respectively, and the mixture of these gases was introduced into the chamber from two directions. Herein, the ratio of the amount of the gas introduced from the axis direction of the torch and the amount of the gas introduced from the direction substantially perpendicular to the axis direction of the torch (referred to as Dₓ:D_{y}) was set to be 30:50. The supply rate of the raw material to the thermal plasma was set to be 0.065 g/min (condition A).

Herein, the temperature of the thermal plasma in the periphery of the current collector was considered to be 600 to 700°C. Particles generated in the thermal plasma were supplied from substantially the normal direction of the current collector and were deposited on the current collector. The active material was deposited for 10 minutes under the condition A thereby forming an active material layer having a thickness of 3.3 µm. In this way, an active material layer induding dendritic active material particles was formed.
An ICP analysis of the active material layer was carried out, and the ratio of elements in the active material layer was confirmed to be Li:Co=1.2:1 (mol ratio).

In the ICP analysis, after an absolute amount of Li and Co was determined by entirely dissolving the electrode plate, an amount of Co was calculated. Supposing that all the Co has formed LiCoO₂, an active material weight of LiCoO₂ in the electrode plate was calculated from the amount of Co. Herein, the current collector was preliminarily subjected to an ICP analysis singly and confirmed to contain no Li and Co.

### (2) Preparation of non-aqueous electrolyte

A liquid non-aqueous electrolyte was prepared by dissolving LiPF₆ as a solute in a non-aqueous solvent at a concentration of 1.25 mol/L. As the non-aqueous solvent, a mixture of ethylene carbonate (EC) and ethylmethyl carbonate (EMC) having a volume ratio of 1:3 was used.

### (3) Production of battery

A coin-type non-aqueous electrolyte secondary battery as shown in FIG 4 was produced.
As a negative electrode 36, a lithium foil having a thickness of 0.3 mm was adhered to an inside of a sealing plate 38. A porous insulating layer 35 was disposed thereon. A positive electrode 33 was disposed on the porous insulating layer 35 such that the side of the positive electrode active material layer faces the porous insulating layer 35. A coned disc spring 37 was disposed on the positive electrode current collector. After the non-aqueous electrolyte was poured until the sealing plate 38 was filled, a case 31 was fit into the sealing plate 38 via a gasket 32, thereby to produce a coin-type battery.

### [Example 2]

As the film forming apparatus, a high frequency induction thermal plasma apparatus similar to Example 1 was used. Thermal plasma was generated in the same manner as Example 1.

As the raw material, the same mixture of Li₂O and Co₃O₄ as that in Example 1 was used. A gas similar to that of Example 1 was introduced into the chamber with a ratio of gas flow rate Dₓ:D_{y} of 20:60. Film forming was performed for 5 minutes with a supply rate of the raw material into the thermal plasma of 0.03 g/min. A second active material layer was formed under the same conditions as in Example 1 except for this (condition B).

Next, a gas was introduced into the chamber with a ratio of the gas flow rate Dₓ:D_{y} of 30:50. Film forming was performed for 10 minutes with a supply rate of the raw material into the thermal plasma of 0.065 g/min (condition A of Example 1). A first active material layer was formed under the same conditions as in Example 1 except for this. The total thickness of the obtained active material layers was 4.3 µm.
An ICP analysis of the active material layer was conducted, and it was confirmed that the ratio of elements in the active material layer was Li:Co=1.2:1.
A coin-type battery was produced in the same manner as in Example 1 except that the above positive electrode was used.

### [Example 3]

A resin solution (also referred to as a first layer solution hereinafter) was prepared by mixing N-methyl-2-pyrrolidone (NMP) and polyvinylidene fluoride (#7208 manufactured by CUREHA CORPORATION, NMP solution containing 8% by weight of PVDF) in a weight ratio of 2:98.

A liquid non-aqueous electrolyte was prepared by dissolving LiPF₆ as a solute at a concentration of 1.25 mol/L in a mixed solvent induding EC, EMC, and diethyl carbonate (DEC) in a volume ratio of 2:3:5. A resin solution (also referred to as a second layer solution hereinafter) was prepared by mixing this liquid non-aqueous electrolyte, PVDF (#8508 manufactured by KUREHA CORPORATION, NMP solution containing 8% by weight of PVDF), and dimethyl carbonate (DMC) in a weight ratio of 3:45:52.

A positive electrode similar to that of Example 1 was immersed in the first layer solution for 10 seconds thereby to make the positive electrode impregnated with the first layer solution. The positive electrode after being impregnated was dried at 80°C for 15 minutes. The cross section of the obtained positive electrode was observed with an electron microscope, and it was found that a first layer having a thickness of 3 µm composed of a gel electrolyte was formed on the surface of the positive electrode.

The second layer solution was applied onto the first layer surface of the positive electrode by immersing the positive electrode on which the first layer was formed in the second layer solution for 10 seconds. The second layer was formed on the surface of the first layer by drying naturally the positive electrode for 10 minutes. The cross section of the obtained was observed with an electron microscope, and it was found that a second layer composed of a gel electrolyte having a thickness of 1 µm was formed on the surface of the first layer.

Next, a negative electrode was produced by forming a negative electrode active material layer composed of SiO_{0.25} on a Cu foil as a negative electrode current collector by a vapor deposition method. In the negative electrode, first and second layers were formed by using the above first and second layer solutions in the same manner as in the positive electrode.

An electrode group was constituted by laminating the positive electrode and the negative electrode obtained above with a porous insulating layer similar to that of Example 1 interposed therebetween. A laminate-type battery was produced by housing the electrode group in an exterior case composed of an aluminum laminate sheet and pouring 0.2 cm³ of liquid non-aqueous electrolyte. Thereafter, the electrode and the porous insulating layer were thermally adhered by pressing the laminate type battery for 2 minutes under the conditions of 100°C and 1 MPa.

### [Comparative Example 1]

An active material layer was formed on a current collector by disposing a current collector (having a thickness of 1 mm) made of an Au plate on a stage and using a magnetron sputtering apparatus. LiCoO₂ was used as a target. The diameter of the target was set to be 3 inches. The distance between the current collector and the target on the stage was set to be 3.5 cm.

The degree of vacuum in the chamber was brought to 5×10⁻² Pa by using a rotary pump and a diffusion pump. Thereafter, an argon gas was introduced with a flow rate of 8×10⁻² Umin and an oxygen gas was introduced with a flow rate of 2×10⁻² Umin into the chamber such that the degree of vacuum in the chamber became 1 Pa. Plasma was generated by applying a high frequency voltage of 80 W with a frequency of 13.56 MHz onto the target. An active material layer was formed with a temperature in the vicinity of the current collector of 25°C and a film forming time of 8 hours. Thereafter, the current collector on which the active material layer was formed was baked at 800°C for an hour by using a muffle furnace. The obtained active material layer had a thickness of 3.5 µm.

An ICP analysis of the active material layer was conducted, and it was confirmed that Li:Co=0.98:1.

A coin type battery was produced in the same manner as in Example 1 except that the above positive electrode was used.

Charging and discharging of the batteries of Examples 1 to 3 and Comparative Example were carried out. Charging and discharging were done at a voltage in the range of 3.05 to 4.25 V on the basis of Li/Li⁺, and initial discharge capacities (discharge capacities at the first cycle) at 0.2 C and 2 C were measured. The temperature condition was 20°C. The results are shown in Table 1.

**[Table 1]**

| | Initial discharge capacity (mAh) | |
|---|---|---|
| | Discharge at 0.2 C | Discharge at 2 C |
| Example 1 | 147 | 126 |
| Example 2 | 150 | 131 |
| Example 3 | 147 | 128 |
| Comparative Example 1 | 146 | 116 |

It was found that the batteries of Examples 1 to 3 had a larger discharge capacity than the battery of Comparative Example 1. In particular, all of Examples 1 to 3 had a large discharge capacity at a high current density of 2 C.

FIG 2 is an electron microscope photograph showing a cross section of the positive electrode active material layer of Example 1. FIG. 5 is an electron microscope photograph showing a surface of the positive electrode active material layer of Example 1. Dendritic active material particles were formed in Example 1. In Example 1, the diameter of 15 dendritic active material particles was about 0.9 to 2.36 µm with an average value of 1.56 µm. Also, the diameter of the bottom portion of 18 particles was about 0.2 to 0.8 µm with an average value of 0.28 µm. Further, the diameter of 8 branch portions was about 0.09 to 0.3 µm with an average value of 0.15 µm. The porosity of the active material layer was 45%. In 15 particles, the average number of branch portions of 0.3 µm or more was 5. The number of branch portions of 0.3 µm or more in the reference particle was 14. The average value of the angle formed between the growth direction of the branch portions of the dendritic active material particles and the normal direction of the current collector was 10°.

FIG 3 is an electron microscope photograph showing a cross section of the positive electrode active material layer of Example 2. FIG. 6 is an electron microscope photograph showing a surface of the positive electrode active material layer of Example 2. In the positive electrode of Example 2, dendritic active material particles were formed in the same manner as in Example 1. In Example 2, an active material layer induding a second active material layer having a thickness of 0.5 to 1 µm and a first active material layer having a thickness of 2 to 3 µm formed on the second active material layer was formed. In the first active material layer, the diameter of 20 dendritic active material particles was about 0.8 to 1.6 µm with an average value of 1.4 µm. Also, the diameter of the bottom portion of 9 particles was about 0.3 to 0.6 µm with an average value of 0.4 µm. Further, the diameter of 8 branch portions was about 0.2 to 0.6 µm with an average value of 0.39 µm. In 6 particles, the average number of branch portions of 0.3 µm or more was 3. The number of branch portions of 0.3 µm or more in the reference particle was 10. The average value of an angle formed between the growth direction of the branch portions of the dendritic active material particles and the normal direction of the current collector was 10°.

FIG. 7 is an electron microscope photograph showing a surface of the positive electrode active material layer of Comparative Example 1. As shown in FIG 7, no dendritic active material particle was formed on the positive electrode active material layer of Comparative Example 1, which had a dense structure.

Comparing FIGS. 2 and 5 (Example 1), and FIGS. 3 and 6 (Example 2) to FIG 7 (Comparative Example 1), the active material in Examples 1 and 2 had a larger specific surface area than that of Comparative Example 1 and it was found that the non-aqueous electrolyte sufficiently permeated up to the vicinity of the current collector. Therefore, in the active material layers in Examples 1 and 2, a favorable lithium ion conductive path was secured thereby improving the charge/discharge characteristics at a high current density.

From above, it was found that the active material layers of Examples 1 to 3 exhibited superior charge/discharge characteristics at a high current density because of including dendritic active material particles.

The reason that the discharge capacity of Example 1 is lower than that of Example 2 is unknown; however, it is considered that in Example 1, since a second active material layer (protective layer) was not formed beforehand at the time of film forming, the current collector was oxidized and deterioration of some layer may have been caused thereby to lower slightly the discharge capacity.

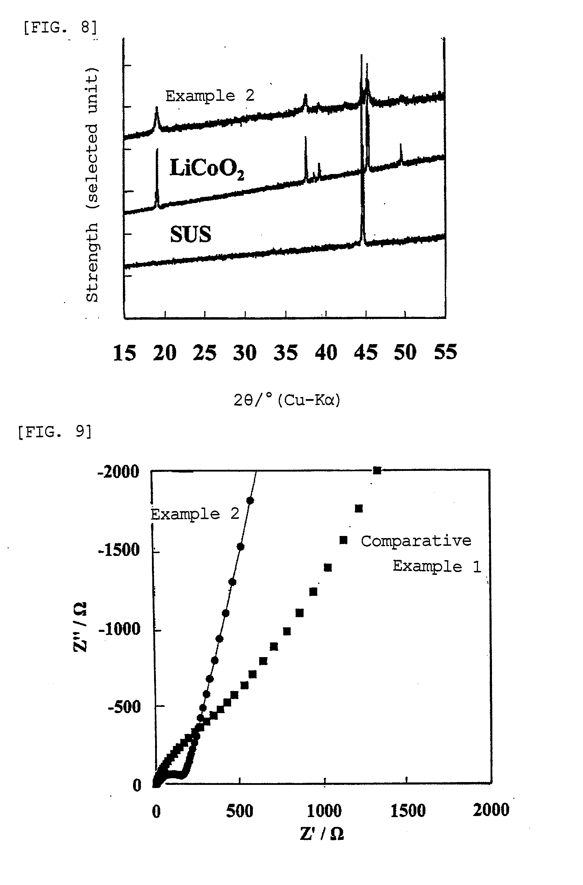

FIG. 8 shows X-ray diffraction patterns of LiCoO₂ positive electrode produced in Example 2 and LiCoO₂ powder prepared by the following process. First, Li₂CO₃ and Co₃O₄ were mixed and baked at 600°C for 5 hours, and subsequently pulverized, which was then baked at 100°C for 5 hours and pulverized thereby to prepare LiCoO₂ powder. In the positive electrode produced in Example 2, LiCoO₂ having a crystal structure of R-3m was confirmed as a main peak.

Alternating current impedance of coin type batteries of Example 2 and Comparative Example 1 was measured at a measurement temperature of 20°C. FIG 9 shows complex impedance plots.

In Example 2, an arc showing the alternating current impedance was small. It is considered that since the active material layer of Example 2 had a larger specific surface area than the active material layer of Comparative Example 1, the alternating current impedance became small. This is considered to be one reason that the positive electrode of the present invention has a high discharge capacity at a high current density.

Concerning the non-aqueous electrolyte secondary battery of Example 3, the first layer has a good binding property with the positive electrode, and the second layer has a superior affinity to the liquid non-aqueous electrolyte in comparison with the first layer. In consequence, it is considered that migration of Li ions between the electrodes improved. Also, flexibility of the non-aqueous electrolyte secondary battery was improved by forming the first layer and the second layer.

From above, it was found that a non-aqueous electrolyte secondary battery having a high capacity and favorable charge/discharge characteristics particularly at a high current density can be obtained by using the positive electrode for a non-aqueous electrolyte secondary battery in accordance with the present invention.

### [Industrial Applicability]

The present invention can provide a positive electrode for a non-aqueous electrolyte secondary battery and a non-aqueous electrolyte secondary battery having a high capacity and favorable charge/discharge characteristics particularly at a high current density. The non-aqueous electrolyte secondary battery of the present invention is useful as a power source for small sized electronic apparatus such as cellular phones as well as large sized electronic apparatus.

### [Reference Signs List]

- 1: Chamber
- 2: Induction coil
- 3: Stage
- 4: Current collector
- 5: Exhaust pump
- 6a, 6b: Gas supply source
- 7a, 7b: Valve
- 8: Raw material supply source
- 9: Power source
- 10: Torch
- 11: Gas supply inlet
- 12: Raw material supply inlet
- 20: Current collector
- 21, 22: First active material layer
- 23: Second active material layer
- 31: Exterior case
- 32: Gasket
- 33: Positive electrode
- 35: Porous insulating layer
- 36: Negative electrode
- 37: Coned disc spring
- 38: Sealing plate

## Claims

1. A positive electrode for a non-aqueous electrolyte secondary battery comprising a current collector and an active material layer,
said active material layer comprising a first active material layer including dendritic active material particles, and
said dendritic active material particles branching out into a plurality of branch portions from a bottom portion of said current collector side toward a surface side of said first active material layer.

2. The positive electrode for a non-aqueous electrolyte secondary battery in accordance with daim 1,
wherein an active material density of said bottom portion side is larger than an active material density of said surface side.

3. The positive electrode for a non-aqueous electrolyte secondary battery in accordance with daim 1,
wherein said branch portions have a diameter of 0.01 to 1 µm.

4. The positive electrode for a non-aqueous electrolyte secondary battery in accordance with daim 1,
wherein an angle formed between the growth direction of said branch portions and the normal direction of said current collector is 0 to 30°.

5. The positive electrode for a non-aqueous electrolyte secondary battery in accordance with daim 1,
wherein said dendritic active material particles have two or more branch portions having a length of 0.3 µm or more.

6. The positive electrode for a non-aqueous electrolyte secondary battery in accordance with daim 1,
wherein said dendritic active material particles have a trunk portion and said plurality of branch portions are disposed randomly in the periphery of said trunk portion.

7. The positive electrode for a non-aqueous electrolyte secondary battery in accordance with daim 1, further comprising a second active material layer between said current collector and said first active material layer,
wherein a porosity of said second active material layer is smaller than a porosity of said first active material layer.

8. A non-aqueous electrolyte secondary battery comprising: a positive electrode; a negative electrode; a non-aqueous electrolyte; and a porous insulating layer interposed between said positive electrode and said negative electrode,
wherein said positive electrode is the positive electrode for a non-aqueous electrolyte secondary battery in accordance with daim 1.
